Europäisches Patentamt

European Patent Office

Office européen des brevets

(19)

(11) **EP 1 032 520 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **98962370.7**

(22) Anmeldetag: **20.11.1998**

(51) Int Cl.⁷: **B60T 13/74**

(86) Internationale Anmeldenummer:
**PCT/EP98/07467**

(87) Internationale Veröffentlichungsnummer:
**WO 99/26829 (03.06.1999 Gazette 1999/22)**

(54) **VERFAHREN UND SYSTEM ZUR ANSTEUERUNG EINER ELEKTROMECHANISCH BETÄTIGBAREN FESTSTELLBREMSE FÜR KRAFTFAHRZEUGE**

METHOD AND SYSTEM FOR CONTROLLING AN ELECTROMECHANICALLY ACTUATED PARKING BRAKE FOR MOTOR VEHICLES

PROCEDE ET SYSTEME DE COMMANDE D'UN FREIN DE STATIONNEMENT A ACTIONNEMENT ELECTROMECANIQUE POUR VEHICULES AUTOMOBILES

(84) Benannte Vertragsstaaten:
**DE FR GB**

(30) Priorität: **22.11.1997 DE 19751904**

(43) Veröffentlichungstag der Anmeldung:
**06.09.2000 Patentblatt 2000/36**

(73) Patentinhaber: **Continental Teves AG & Co. oHG 60488 Frankfurt am Main (DE)**

(72) Erfinder: **BÖHM, Jürgen D-65558 Oberneisen (DE)**

(56) Entgegenhaltungen:
**DE-A- 19 526 645          DE-A- 19 536 694**

## Beschreibung

Die Erfindung bezieht sich auf ein Verfahren zur Ansteuerung einer Feststellbremse, die über ein Kraftübertragungselement mittels eines Aktuators elektromechanisch betätigbar ist, der aus einem Elektromotor sowie einem zwischen dem Elektromotor und dem Kraftübertragungselement angeordneten, selbsthemmenden Getriebe besteht, sowie auf ein System zur Ansteuerung einer elektromechanisch betätigbaren Feststellbremse.

Eine derartige elektromechanisch betätigbare Feststellbremse ist z. B. aus der deutschen Offenlegungsschrift DE 19714046 A1 bekannt. Das Besondere an der vorbekannten Feststellbremse besteht darin, daß der Rotor des Elektromotors hohl bzw. rohrförmig ausgebildet ist und das Getriebe radial umgreift. Durch diese Maßnahme wird erreicht, daß eine eine geringe axiale Baulänge aufweisende Betätigungseinheit realisiert werden kann. Dem erwähnten Stand der Technik sind jedoch keine Hinweise auf die Ansteuerung der Betätigungseinheit zu entnehmen.

Das Dokument DE-A-19 536 694 offenbart ein Steversystem für eine elektromotorisch betätigte Radbremse.

Die Erfindung beruht daher auf der Aufgabe, ein Verfahren sowie ein System zur Ansteuerung einer elektromechanisch betätigbaren Feststellbremse vorzuschlagen, das eine Einstellung von erforderlichen Betätigungskraft-Sollwerten ermöglicht. Eine weitere Aufgabe der Erfindung besteht darin, ein Verfahren sowie ein System anzugeben, die ein Lösen der Feststellbremse sowie ein Einstellen des Belaglüftspiels ermöglichen. Außerdem soll eine Überwachung der ordnungsgemäßen Funktion bzw. eine Überwachung auf Einhaltung vorgegebener Grenzwerte (z. B. Maximalstrom, Leistungsbedarf) ermöglicht werden.

Diese Aufgabe wird verfahrenmäßig dadurch gelöst, daß zur Bestimmung einer an den Aktuator anzulegenden Spannung entsprechend der gewünschten Betätigungskraft sowie des Betätigungskraftgradienten der dem Aktuator zuzuführende Strom sowie die Aktuatorposition ausgewertet werden.

Zur Konkretisierung des Erfindungsgedankens ist vorgesehen, daß der gewünschten Betätigungskraft sowie ihrem Gradienten durch eine Funktionssteuerung und Überwachung eine gewünschte Aktuatorposition sowie eine gewünschte Aktuatordrehzahl zugeordnet wird.

Dabei werden die gewünschte Aktuatorposition sowie die gewünschte Aktuatordrehzahl vorzugsweise einer Positionsregelung unterworfen, um ein den Aktuatorstrom-Sollwert repräsentierendes Signal zu bilden.

Die Berechnung der an den Aktuator anzulegenden Spannung erfolgt vorzugsweise durch Auswertung des den Aktuatorstrom-Sollwert repräsentierenden Signals unter Berücksichtigung eines den Aktuatordrehzahl-Istwert repräsentierenden Signals.

Ein weiteres vorteilhaftes Merkmal des erfindungsgemäßen Verfahrens besteht darin, daß in Abhängigkeit von einer Schaltvariablen an den Aktuator ein zweiter Spannungswert anlegbar ist, der vorzugsweise 0V beträgt.

Die Schaltvariable kann dabei fehler- und/oder funktionsbedingt von der Funktionssteuerung und Überwachung oder funktionsbedingt von der Positionsregelung gesetzt werden.

Ein erfindungsgemäßes Ansteuersystem zur Durchführung des vorhin erwähnten Verfahrens zeichnet sich dadurch aus, daß

a) ein Funktionssteuerung- und Überwachungsmodul vorgesehen ist, dem als Eingangsgrößen Sollwerte der Betätigungskraft sowie des Betätigungskraftgradienten repräsentierende Signale, ein die Aktuator-Istposition repräsentierendes Signal, sowie ein den Aktuator-Iststrom repräsentierendes Signal zugeführt werden und das aus den Eingangsgrößen den Aktuatordrehzahl-Sollwert, den Aktuatorposition-Sollwert sowie den Aktuatordrehzahl-Istwert erzeugt,

b) ein Positionsregler vorgesehen ist, dem als Eingangsgrößen die Signale zugeführt werden, die dem Aktuatordrehzahl-Soll- und -Istwert sowie dem Aktuatorposition-Soll- und Istwert entsprechen und der das den Aktuatorstrom-Sollwert repräsentierende Signal liefert und dem

c) ein Berechnungsmodul nachgeschaltet ist, in dem das den Aktuatorstrom-Sollwert repräsentierende Signal in die gewünschte an den Aktuator anzulegende Spannung umgewandelt wird und in dem unter Berücksichtigung des Aktuatordrehzahl-Istwertes eine Kompensation der vom Aktuator aufgebrachten Gegen-EMK stattfindet.

Dabei wird davon ausgegangen, daß im elektromechanischen Antriebsstrang Elemente vorhanden sind, die eine Selbsthemmung aufweisen. Durch die gezielte Ausnutzung des Selbsthemmungseffektes bei der Aktuatoransteuerung ergibt sich gegenüber einem System ohne Selbsthemmung eine vereinfachte Regelstruktur. Dabei muß die elektrische Feststellbremse bei Erreichen einer vorgegebenen Zielposition bzw. Zielkraft nicht geregelt abgebremst werden, sondern kann auf einfache Weise durch den Einfluß der hohen Haftreibung zum Stillstand gebracht werden. Aufgrund der Selbsthemmung bleibt die Feststellbremse auch im stromlosen Zustand in dieser Position.

Bei einer vorteilhaften Weiterbildung des erfindungsgemäßen Ansteuerungssystems ist vorgesehen, daß dem Berechnungsmodul Schaltmittel nachgeschaltet sind, die in Abhängigkeit von einer Schaltvariablen das Anlegen eines zweiten Spannungswertes an den Aktuator ermöglichen, der vorzugsweise 0V beträgt.

Bei einer weiteren Ausgestaltung des erfindungsgemäßen Systems wird das Ausgangssignal der Schaltmittel einer elektronischen Ansteuerschaltung (Servoverstärker) zugeführt, mit deren Ausgangssignal der Aktuator angesteuert wird.

Weitere vorteilhafte Ausgestaltungen des Erfindungsgegenstandes sind den Patentansprüchen 11 bis 14 zu entnehmen.

Weitere Einzelheiten, Merkmale und Vorteile der Erfindung gehen aus der nachfolgenden Beschreibung eines Ausführungsbeispiels unter Bezugnahme auf die beiliegende Zeichnung hervor. In der Zeichnung zeigt:

Fig. 1    eine Ausführung eines Regelsystems zur Durchführung des erfindungsgemäßen Verfahrens,

Fig. 2    den Aufbau des im Regelsystem gemäß Fig. 1 verwendeten Positionsreglers und

Fig. 3    den Aufbau des im Regelsystem gemäß Fig. 1 verwendeten Berechnungsmoduls zur Berechnung der gewünschten Aktuatorspannung.

Die folgende Beschreibung bezieht sich zum besseren Verständnis des Prinzips auf eine elektrische Trommelbremse. Das Verfahren ist jedoch auch ohne Modifikation bei anderen elektrisch betätigten Bremsen einsetzbar.

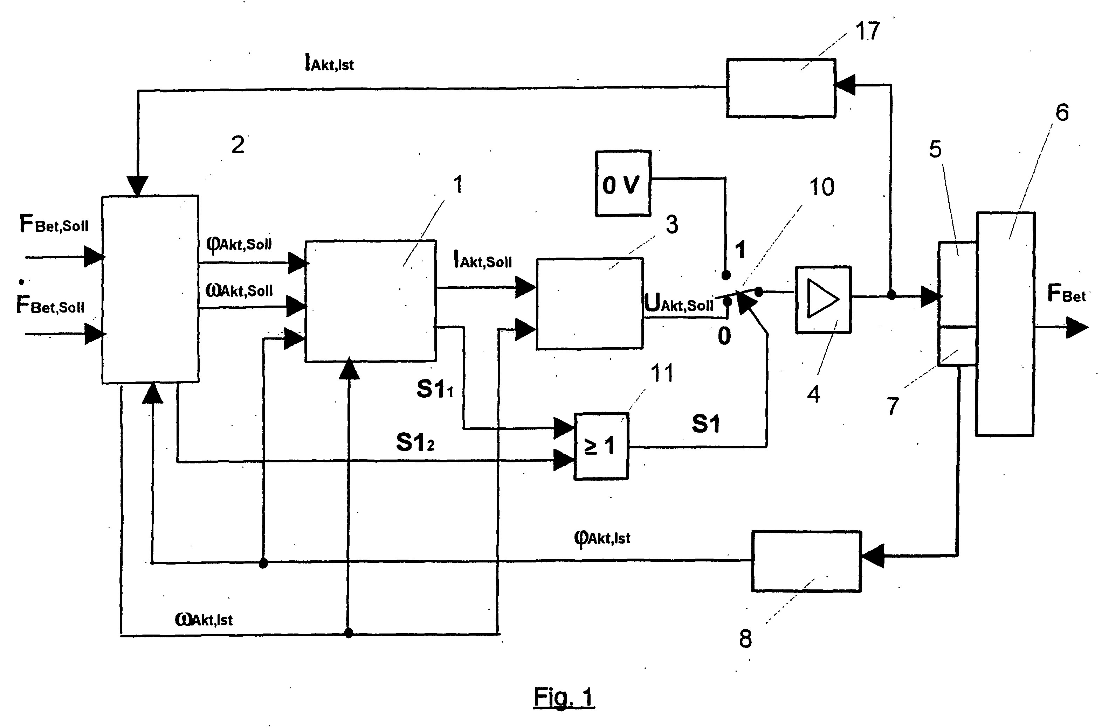

Das in Fig. 1 dargestellte Regelsystem besteht im wesentlichen aus einem Positionsregler 1, einem dem Positionsregler 1 vorgeschalteten Funktionssteuerungs- und Überwachungsmodul 2, einem dem Positionsregler 1 nachgeschalteten Berechnungsmodul 3, einem dem Berechnungsmodul 3 nachgeschalteten Schalter 10 sowie einem dem Schalter 10 nachgeschalteten Servoverstärker 4, mit dessen dem Aktuatorstrom-Istwert entsprechendem Ausgangssignal $I_{Akt,Ist}$ ein lediglich schematisch angedeuteter Aktuator 5 einer elektromechanisch betätigbaren Feststellbremse angesteuert wird, die mit dem Bezugzeichen 6 versehen ist. Der Aktuator ist vorzugsweise mit einem Positionsmeßsystem 7 ausgestattet, dessen die Aktuator-Istposition repräsentierendes Ausgangssignal $\varphi_{Akt,Ist}$ über eine Positionssignalaufbereitungsschaltung 8 einerseits dem Funktionssteuerungs- und Überwachungsmodul 2 und andererseits dem Positionsregler 1 zugeführt wird. Das dem Aktuatorstrom-Istwert entsprechende Signal $I_{Akt,Ist}$ wird mittels einer Strommeßeinrichtung 17 als Eingangsgröße dem Funktionssteuerungs- und Überwachungsmodul 2 zugeführt.

Die Ansteuerung der erwähnten elektromechanisch betätigbaren Feststellbremse 6 basiert auf einer Kraftsteuerung. Dabei wird von einem Bedienelement bzw. von einer übergeordneten Systemeinheit ein Sollwert für die einzustellende Betätigungskraft $F_{Bet,Soll}$ vorgegeben bzw. dem Funktionssteuerungs- und Überwachungsmodul 2 zugeführt, das zusätzlich noch einen Sollwert des Betätigungskraftgradienten $\dot{F}_{Bet,Soll}$ erhält. Als weitere Eingangsgrößen werden dem erwähnten Modul 2 noch die Signale zugeführt, die dem Aktuatorposition-Istwert $\varphi_{Akt,Ist}$ sowie dem Aktuatorstrom-Istwert $I_{Akt,Ist}$ entsprechen. Im Funktionssteuerungs- und Überwachungsmodul 2 werden mit Hilfe eines den Zusammenhang zwischen der Aktuatorposition $\varphi$ und der Betätigungskraft $F_{Bet}$ darstellenden mathematischen Modells der Aktuatorposition-Sollwert $\varphi_{Akt,Soll}$ sowie der Aktuatordrehzahl-Sollwert $\omega_{Akt,Soll}$ berechnet. Der Aktuatordrehzahl-Sollwert $\omega_{Akt,Soll}$ ergibt sich dabei aus der Gleichung $\dot{F}_{Bet,Soll} = K_E(\varphi_{Akt,Ist}) \cdot \omega_{Akt,Soll}$, wobei mit $\dot{F}_{Bet,Soll}$ der Betätigungskraftgradient und $K_E$ die Steifigkeit des Systems bezeichnet werden, so daß für den Aktuatordrehzahl-Sollwert gilt:

$$\omega_{Akt,Soll} = 1/K_E(\varphi_{Akt,Ist}) \cdot \dot{F}_{Bet,Soll}.$$

Darüber hinaus erfolgt im Funktionssteuerungs- und Überwachungsmodul 2 die Berechnung des Aktuatordrehzahl-Istwertes $\omega_{Akt,Ist}$ durch Differenzieren des Aktuatorposition-Istwertes $\varphi_{Akt,Ist}$ in einem Filter mit differenzierender Funktion.

Das Funktionssteuerungs- und Überwachungsmodul 2 führt außerdem eine Funktionsüberwachung sowie eine Fehlerüberwachung durch. Die Funktionsüberwachung erfolgt vorzugsweise durch Betrachtung des Aktuatorstrom-Istwertes $I_{Akt,Ist}$ während eines Zuspannvorgangs. Wenn der Aktuatorstrom-Istwert $I_{Akt,Ist}$ einen maximalen Dauerstromwert überschreitet, wird die Betätigung nach Ablauf einer definierten Zeit abgeschaltet. Das funktionsbedingte Abschalten erfolgt mittels einer vom Funktionssteuerungs- und Überwachungsmodul 2 erzeugten Schaltvariablen $S1_2$. Bei der Fehlerüberwachung wird das Systemverhalten der elektrischen Feststellbremse anhand von $\varphi_{Akt,Soll}$, $\varphi_{Akt,Ist}$, $I_{Akt,Ist}$, $F_{Bet,Soll}$, $\dot{F}_{Bet,Soll}$, $\omega_{Akt,Soll}$ und $\omega_{Akt,Ist}$ auf Einhaltung der vorgegebenen Werte bzw. Plausibilität geprüft.

Die Aufgabe des dem Funktionssteuerungs- und Überwachungsmodul 2 nachgeschalteten Positionsreglers 1 besteht darin, den gegenwärtigen Aktuatorposition-Istwert $\varphi_{Akt,Ist}$ an den gewünschten Aktuatorposition-Sollwert $\varphi_{Akt,Soll}$ anzugleichen. Dabei werden dem Positionsregler 1 als Eingangsgrößen der Aktuatorposition-Soll- und -Istwert $\varphi_{Akt,Soll}$, $\varphi_{Akt,Ist}$, der Aktuatordrehzahl-Sollwert $\omega_{Akt,Soll}$ und ggf. der Aktuatordrehzahl-Istwert $\omega_{Akt,Ist}$ zugeführt. Die Ausgangsgrößen des Positionsreglers 1 bilden der Aktuatorstrom-Sollwert $I_{Akt,Soll}$ sowie eine zweite Schaltvariable $S1_1$. Der Aktuatorstrom-Sollwert $I_{Akt,Soll}$ wird unter Berücksichtigung des Aktuatordrehzahl-Istwertes $\omega_{Akt,Ist}$ im Berechnungsmodul 3 in ein der gewünschten, an den Aktuator 5 anzulegenden Spannung entsprechendes Signal $U_{Akt,Soll}$ umgewandelt, das über einen Schalter 10 der Ansteuerelektronik bzw. dem Verstärker 4 zugeführt wird, der dem Aktuator 5 zuzuführenden Stromwert $I_{Akt,Ist}$ liefert. Der Schalter 10 wird mittels einer Schaltvariablen S1 angesteuert, die entweder der vorhin erwähnten ersten Schalvariablen $S1_2$ oder der zweiten Schaltvariablen $S1_1$ entspricht, die einem logischen ODER-Glied 11 zugeführt werden. In der in Fig. 1 dargestellten ersten Schaltstellung wird dem Verstärker 4 das bereits erwähnte Spannungssignal $U_{Akt,Soll}$ zugeführt, während in der zweiten Schaltstellung des Schalters 10 dem Verstärker 4 ein zweiter Spannungswert, vorzugsweise 0 V, zugeführt wird. Nach dem Einschalten der Reglerelektronik liest das Funktionssteuerungs- und Überwachungsmodul 2 aus einem nichtflüchtigen Speicher den zuletzt angefahrenen Zustand (Aktuatorposition, Bremse gespannt/gelöst, Lüftspielposition) ein. Dieser Zustand wird so lange beibehalten, bis mittels der Vorgabe $F_{Bet,Soll}$ eine Änderung initiiert wird. Befindet sich die Feststellbremse in einem gelösten Zustand, so wird die Position beibehalten, so lange $F_{Bet,Soll}$ = 0. Mit der Vorgabe eines Sollwertes $F_{Bet,Soll}$ > 0 wird dann das Zuspannen der Feststellbremse veranlaßt. Dabei wird während der Zuspannbewegung zunächst eine definierte Testbewegung zur Feststellung des Belaglüftspiels vorgenommen. Ist die Lüftspielposition detektiert, so wird umgehend auf Positionsregelung bzw. Kraftsteuerung umgeschaltet. Alle weiteren Betätigungskraft-Sollwerte werden dann bis zur Durchführung der nächsten Lüftspieldetektionsbewegung kraftgesteuert mittels der Positionsregelung eingestellt.

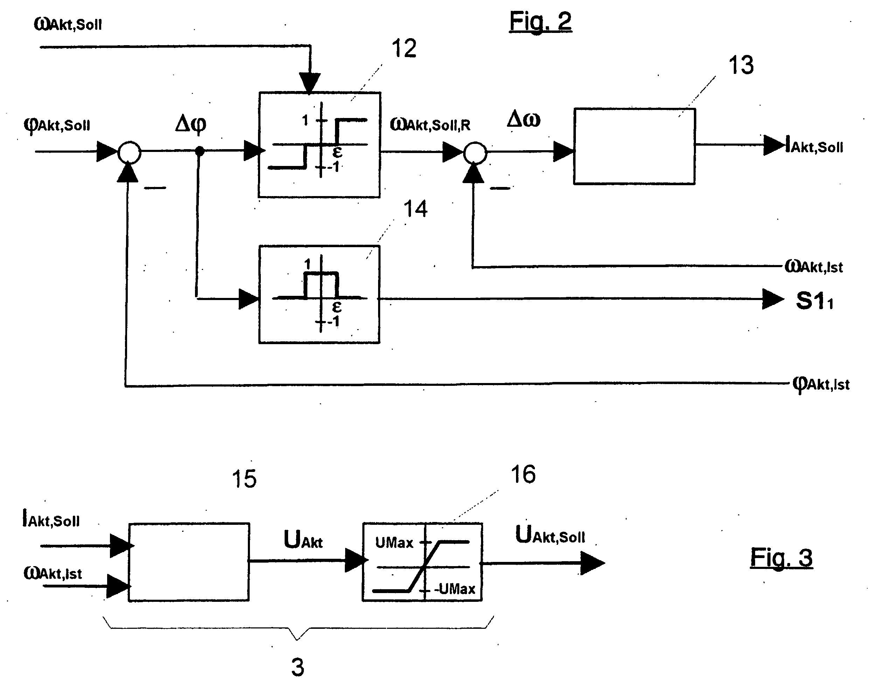

Eine mögliche Realisierungsvariante des im Zusammenhang mit Fig. 1 erwähnten Positionsreglers 1 ist in Fig. 2 dargestellt. Der darin gezeigte Positionsregler besteht im wesentlichen aus einer Reihenschaltung eines Dreipunktschalters 12 sowie eines Geschwindigkeits- bzw. Drehzahlreglers 13. Dem Dreipunktschalter 12, der nicht unbedingt symmetrisch gestaltet sein muß, wird als Eingangsgröße der Aktuatordrehzahl-Sollwert $\omega_{Akt,Soll}$ ohne Vorzeichen zugeführt, dem in Abhängigkeit von einer Aktuatorposition-Regelabweichung $\Delta\varphi = \varphi_{Akt,Soll} - \varphi_{Akt,Ist}$ das Vorzeichen, das die Bewegungsrichtung des Aktuators 5 definiert, zugeordnet wird. Die Ausgangsgröße des Dreipunktschalters 12 wird mit $\varphi_{Akt,Soll,R}$ bezeichnet. Der Geschwindigkeits- bzw. Drehzahlregler 13, der im einfachsten Fall als ein linearer PI-Regler ausgeführt werden kann und dem eine Aktuatordrehzahl-Regelabweichung $\Delta\omega = \omega_{Akt,Soll,R} - \omega_{Akt,Ist}$ zugeführt wird, liefert an seinem Ausgang den Aktuatorstrom-Sollwert $I_{Akt,Soll}$ und gleicht somit den erfaßten bzw. aus dem Aktuatorposition-Istwert $\varphi_{Akt,Ist}$ berechneten Aktuatordrehzahl-Istwert $\omega_{Akt,Ist}$ an den gewünschten Aktuatorstrom-Sollwert $I_{Akt,Soll}$ an.

Wie Fig. 2 weiter zu entnehmen ist, ist dem Dreipunktschalter 12 ein Zweipunktschalter 14 parallelgeschaltet, dem der Betrag der Aktuatorposition-Regelabweichung $|\Delta\varphi| = \varphi_{Akt,Soll} - \varphi_{Akt,Ist}$ zugeführt wird und der die vorhin erwähnte, funktionsbedingt setzbare Schaltvariable $S1_1$ liefert. Liegt der Betrag $|\Delta\varphi|$ innerhalb eines bestimmten Bereichs, der im gezeigten Beispiel mit $\varepsilon$ bezeichnet ist, so nimmt die Schaltvariable $S1_1$ den Wert einer "1" ein, während sie für sämtliche, außerhalb des definierten Bereichs $\varepsilon$ liegenden Werte des Betrags $|\Delta\varphi|$ einer "0" entspricht. Durch die Schaltvariable $S1_1$ erfolgt das vorhin erwähnte funktionsbedingte Abschalten des Aktuators 5 bei Erreichen des Aktuatorposition-Sollwertes $\varphi_{Akt,Soll}$.

Fig. 3 zeigt schließlich den Aufbau des dem Positionsregler 1 nachgeschalteten Berechnungsmoduls 3, in dem der Sollwert der an den Aktuator 5 anzulegenden Spannung $U_{Akt,Soll}$ berechnet wird. Wie Fig. 3 zu entnehmen ist, besteht das darin dargestellte Berechnungsmodul 3 aus einem Modul 15 zur Kompensation der vom Aktuator 5 aufgebrachten Gegen-EMK sowie einer dem Modul 15 nachgeschalteten Begrenzung 16. Im Kompensationsmodul 15 wird anstelle einer Stromregelung eine Stromsteuerung durchgeführt. Dabei ist es besonders vorteilhaft, daß die Loopzeit für die Regelung des Gesamtsystems entsprechend den Dynamikanforderungen des elektromechanischen Antriebsstranges eingestellt werden kann (hier 1,5...3 ms). Voraussetzung ist, daß die verwendeten Parameter des Aktuators 5 (hier R und $\psi_{EMK}$) bekannt und näherungsweise konstant sind. Änderungen dieser Parameter, die z. B. durch Wärme oder Alterung verursacht werden, müssen mittels einer signalbasierten Adaptionseinrichtung entsprechend nachgeführt werden, die ggf. im Funktionssteuerungs- und Überwachungsmodul 2 integriert ist. In der Adaptionseinrichtung kann u. U. auch eine Adaption des Zusammenhangs zwischen Betätigungskraft $F_{Bet}$ und Aktuatorposition $\varphi_{Akt}$ durchgeführt werden.

Der Betätigungskraft-Sollwert $F_{Bet,Soll}$ wird bei einer Vorgabe mittels des Bedienelementes durch eine entsprechende Signalverarbeitung definiert. Für den Sollwert des Betätigungskraftgradienten $\dot{F}_{Bet,Soll}$ kann dabei ein geeigneter Wert, z. B. $\dot{F}_{Bet,Soll,Max}$ angenommen werden. Wird ein kontinuierlich arbeitendes Bedienelement, z. B. ein Potentiometer, benutzt, so ergibt sich der Sollwert des Betätigungskraftgradienten $\dot{F}_{Bet,Soll}$ aufgrund der Vorgabe. Bei einem digital arbeitenden Bedienelement, z. B. einem Taster, muß für den Sollwert des Betätigungskraftgradienten $\dot{F}_{Bet,Soll}$ ein geeigneter Wert zugrunde gelegt werden.

Wird bei der Berechnung des Betätigungskraft-Sollwertes $F_{bet,Soll}$ für die elektrische Feststellbremse anhand der Signale des Bedienelementes zusätzlich ein die Fahrzeuggeschwindigkeit repräsentierendes Signal berücksichtigt, so besteht weiterhin die Möglichkeit, auf der Basis dieses Signals den Betätigungskraft-Sollwert $F_{bet,Soll}$ und vor allem den Sollwert des Betätigungskraftgradienten $\dot{F}_{Bet,Soll}$ in geeigneter Weise zu beeinflussen. Somit besteht die Möglichkeit, die elektrische Feststellbremse so anzusteuern, daß sie

a) im Stillstand bzw. bei niedrigen Fahrzeuggeschwindigkeiten mit maximaler Dynamik gespannt und gelöst wird, und

b) bei mittleren und hohen Fahrzeuggeschwindigkeiten mit einer reduzierten Dynamik bzw. mit definierten Betätigungskraftgradienten betätigt und gelöst wird.

**Patentansprüche**

1.  Verfahren zur Ansteuerung einer Feststellbremse, die über ein Kraftübertragungselement mittels eines Aktuators elektromechanisch betätigbar ist, der aus einem Elektromotor sowie einem zwischen dem Elektromotor und dem Kraftübertragungselement angeordneten, selbsthemmenden Getriebe besteht, **dadurch gekennzeichnet, daß** zur Bestimmung einer an den Aktuator (5) anzulegenden Spannung ($U_{Akt,Soll}$) die gewünschte Betätigungskraft ($F_{bet,Soll}$), der Betätigungskraftgradient ($\dot{F}_{Bet,Soll}$), der dem Aktuator (5) zugeführte Strom ($I_{Akt,Ist}$) sowie die Aktuatorposition ($\varphi_{Akt,Ist}$) ausgewertet werden.

2.  Verfahren nach Anspruch 1 **dadurch gekennzeichnet, daß** der gewünschten Betätigungskraft ($F_{Bet,Soll}$) sowie ihrem Gradienten ($\dot{F}_{Bet,Soll}$) durch eine Funktionssteuerung und -Überwachung eine gewünschte Aktuatorposition ($\varphi_{Akt,Soll}$) sowie eine gewünschte Aktuatordrehzahl ($\omega_{Akt,Soll}$) zugeordnet werden.

3.  Verfahren nach Anspruch 2 **dadurch gekennzeichnet, daß** die gewünschte Aktuatordrehzahl ($\omega_{Akt,Soll}$) sowie die gewünschte Aktuatorposition ($\varphi_{Akt,Soll}$) einer Positionsregelung unterworfen werden, um ein den gewünschten Aktuatorstrom ($I_{Akt,Soll}$) repräsentierendes Signal zu bilden.

4.  Verfahren nach Anspruch 3 **dadurch gekennzeichnet, daß** die Berechnung der an den Aktuator (5) anzulegenden Spannung ($U_{Akt,Soll}$) durch Auswertung des dem gewünschten Aktuatorstrom ($I_{Akt,Soll}$) repräsentierenden Signals unter Berücksichtigung eines den Aktuatordrehzahl-Istwert repräsentierenden Signals ($\omega_{Akt,Ist}$) erfolgt.

5.  Verfahren nach Anspruch 4 **dadurch gekennzeichnet, daß** in Abhängigkeit von einer Schaltvariablen ($S_1$) an den Aktuator (5) ein zweiter Spannungswert anlegbar ist, der vorzugsweise 0V beträgt.

6.  Verfahren nach Anspruch 5 **dadurch gekennzeichnet, daß** die Schaltvariable ($S_1$) funktionsbedingt ($S1_1$) von der Positionsregelung gesetzt wird.

7.  Verfahren nach Anspruch 5 **dadurch gekennzeichnet, daß** die Schaltvariable ($S_1$) funktions- und/oder fehlerbedingt ($S1_2$) von der Funktionssteuerung und Überwachung gesetzt wird.

8.  System zur Ansteuerung einer Feststellbremse, die über ein Kraftübertragungselement mittels eines Aktuators elektromechanisch betätigbar ist, der aus einem Elektromotor sowie einem zwischen dem Elektromotor und dem Kraftübertragungselement angeordneten, selbsthemmenden Getriebe besteht, **dadurch gekennzeichnet, daß**

    a) ein Funktionssteuerungs- und Überwachungsmodul (2) vorgesehen ist, dem als Eingangsgrößen die Sollwerte der Betätigungskraft ($F_{Bet,Soll}$) sowie des Betätigungskraftgradienten ($\dot{F}_{Bet,Soll}$) repräsentierende Signale, ein den Aktuatorposition-Istwert ($\varphi_{Akt,Ist}$) repräsentierendes Signal, sowie ein den Aktuatorstrom-Istwert ($I_{Akt,Ist}$) repräsentierendes Signal zugeführt werden und das aus den Eingangsgrößen den Aktuatordrehzahl-Sollwert ($\omega_{Akt,Soll}$), den Aktuatorposition-Sollwert ($\varphi_{Akt,Soll}$) sowie den Aktuatordrehzahl-Istwert ($\omega_{Akt,Ist}$) erzeugt,

    b) ein Positionsregler (1) vorgesehen ist, dem als Eingangsgrößen die Signale zugeführt werden, die dem Aktuatordrehzahl-Soll- und -Istwert ($\omega_{Akt,Soll}, \omega_{Akt,Ist}$) sowie dem Aktuatorposition-Soll- und -Istwert ($\varphi_{Akt,Soll}, \varphi_{Akt,Ist}$) entsprechen und der das den Aktuatorstrom-Sollwert ($I_{Akt,Soll}$) repräsentierende Signal liefert und dem

    c) ein Berechnungsmodul (3) nachgeschaltet ist, in dem das den Aktuatorstrom-Sollwert ($I_{Akt,Soll}$) repräsentierende Signal in das die an den Aktuator (5) anzulegende Spannung ($U_{Akt,Soll}$) repräsentierende Signal umgewandelt wird und unter Berücksichtigung des Aktuatordrehzahl-Istwertes ($\omega_{Akt,Ist}$) eine Kompensation der vom Aktuator (5) aufgebrachten Gegen-EMK stattfindet.

9.  System nach Anspruch 8 **dadurch gekennzeichnet, daß** dem Berechnungsmodul (3) Schaltmittel (10,11) nachgeschaltet sind, die in Abhängigkeit von einer Schaltvariablen ($S_1$) das Anlegen eines zweiten Spannungswertes an den Aktuator (5) ermöglichen, der vorzugsweise 0V beträgt.

10. System nach Anspruch 9 **dadurch gekennzeichnet, daß** das Ausgangssignal der Schaltmittel (10) einer elektronischen Ansteuerschaltung (4) zugeführt wird, mit deren Ausgangssignal ($I_{Akt,Ist}$) der Aktuator (5) angesteuert wird.

11. System nach einem der Ansprüche 8 bis 10 **dadurch gekennzeichnet, daß** der Positionsregler (1) aus einem Dreipunktschalter (12) sowie einem dem Dreipunktschalter (12) nachgeschalteten Drehzahlregler (13) besteht,wobei der Dreipunktschalter (12) in Abhängigkeit von einer Positionsregelabweichung ($\Delta\varphi$) einen definierten Aktuatordrehzahl-Sollwert ($\omega_{Akt,Soll,R}$) vorgibt, der mit dem Aktuatordrehzahl-Istwert ($\omega_{Akt,Ist}$) verglichen wird und die entstehende Regelabweichung ($\Delta\omega$) als Eingangsgröße dem Drehzahlregler (13) zugeführt wird, dessen Ausgangsgröße den Aktuatorstrom-Sollwert ($I_{Akt,Soll}$) darstellt.

12. System nach Anspruch 11 **dadurch gekennzeichnet, daß** der Drehzahlregler (13) als ein linearer PI-Regler ausgebildet ist.

13. System nach Anspruch 11 oder 12 **dadurch gekennzeichnet, daß** dem Dreipunktschalter (12) ein Zweipunktschalter (14) parallelgeschaltet ist, dem als Eingangsgröße die Positionsregelabweichung ($\Delta\varphi$) zugeführt wird und dessen Ausgangsgröße die funktionsbedingt setzbare Schaltvariable ($S1_1$) darstellt.

14. System nach einem der Ansprüche 8 bis 13 **dadurch gekennzeichnet, daß** das Berechnungsmodul (3) aus einem Modul (15) zur Kompensation der Gegen-EMK sowie einer dem Modul (15) nachgeschalteten Begrenzung(16) besteht.

**Claims**

1. Method for actuating a parking brake which is electromechanically operable by an actuator by way of a force-transmitting element, the said actuator being comprised of an electric motor and a self-locking gear which is interposed between the electric motor and the force-transmitting element, **characterized in that** the desired actuating force ($F_{actF,nominal}$), the actuating force gradient ($\dot{F}_{actF,nominal}$), the current ($I_{Act,actual}$) supplied to the actuator (5), and the actuator position ($\varphi_{Act,actual}$) are evaluated to determine a voltage ($U_{Act,nominal}$) that is to be applied to the actuator (5).

2. Method as claimed in claim 1, **characterized in that** a desired actuator position ($\varphi_{Act,nominal}$) and a desired actuator rotational speed ($\omega_{Act,nominal}$) is associated with the desired actuating force ($F_{actF,nominal}$) and its gradient ($\dot{F}_{actF,nominal}$) by function control and monitoring.

3. Method as claimed in claim 2, **characterized in that** the desired actuator rotational speed ($\omega_{Act,nominal}$) and the desired actuator position ($\varphi_{Act,nominal}$) are subjected to a position control in order to produce a signal representative of the desired actuating current ($I_{Act,nominal}$).

4. Method as claimed in claim 3, **characterized in that** the voltage ($U_{Act,nominal}$) that is to be applied to the actuator (5) is calculated by evaluating the signal representative of the desired actuating current ($I_{Act,nominal}$) in consideration of a signal representative of the actuator rotational speed actual value ($\omega_{Act,actual}$).

5. Method as claimed in claim 4, **characterized in that** a second voltage value, which preferably amounts to 0 volt, can be applied to the actuator (5) in dependence on a switching variable ($S_1$).

6. Method as claimed in claim 5, **characterized in that** the switching variable ($S_1$) is set by the position control due to functional reasons ($S1_1$).

7. Method as claimed in claim 5, **characterized in that** the switching variable ($S_1$) is set by the function control and monitoring due to error and/or functional reasons ($S1_2$).

8. System for actuation of a parking brake which is electromechanically operable by an actuator by way of a force-transmitting element, the said actuator being comprised of an electric motor and a self-locking gear which is interposed between the electric motor and the force-transmitting element, **characterized in that**

   a) there is provision of a function controlling and monitoring module (2) which is furnished, as input quantities, with the nominal values of the actuating force ($F_{actF,nominal}$) and signals representative of the actuating force gradient ($\dot{F}_{actF,nominal}$), with a signal representative of the actuator position actual value ($\varphi_{Act,actual}$), and a signal representative of the actuator current actual value ($I_{Act,actual}$), and which produces from the input quantities the nominal value of the actuator speed ($\omega_{Act,nominal}$), the nominal value of the actuator position ($\varphi_{Act,nominal}$), and the actual value of the actuator rotational speed ($\omega_{Act,actual}$),

   b) there is provision of a position controller (1) to which are sent, as input quantities, the signals that correspond to the nominal and actual value of the actuator rotational speed ($\omega_{Act,nominal}$, $\omega_{Act,actual}$) and the nominal and actual value of the actuator position ($\varphi_{Act,nominal}$, $\varphi_{Act,actual}$) and which provides the signal representative of the actuator current nominal value ($I_{Act,nominal}$), and

c) connected downstream of which is a calculating module (3) in which the signal representative of the actuator current nominal value ($I_{Act,nominal}$) is converted into the signal representative of the voltage ($U_{Act,nominal}$) that is to be applied to the actuator (5), and in which there occurs a compensation of the opposing electromagnetic force generated by the actuator (5) in consideration of the actual value of the actuator rotational speed ($\omega_{Act,actual}$).

9. System as claimed in claim 8, **characterized in that** switching means (10, 11) are connected downstream of the calculating module (3) and permit applying a second voltage, that is preferably zero volt, to the actuator (5) in dependence on a switching variable ($S_1$).

10. System as claimed in claim 9, **characterized in that** the output signal of the switching means (10) is sent to an electronic actuating circuit (4) whose output signal ($I_{Act,actual}$) is used to drive the actuator (5).

11. System as claimed in any one of claims 8 to 10, **characterized in that** the position controller (1) includes a three-point switch (12) and a rotational speed controller (13) which is connected downstream of the three-point switch (12), and the three-point switch (12) predetermines in dependence on a position deviation ($\Delta\varphi$) a defined actuator rotational speed nominal value ($\omega_{Act,nominal,R}$) which is compared with the actuator rotational speed actual value ($\omega_{Act,actual}$), and the resulting deviation ($\Delta\omega$) is sent as an input quantity to the rotational speed controller (13) whose output quantity represents the actuator current nominal value ($I_{Act,nominal}$).

12. System as claimed in claim 11, **characterized in that** the rotational speed controller (13) is configured as a linear PI-controller.

13. System as claimed in claim 11 or 12, **characterized in that** connected in parallel to the three-point switch (12) is a two-point switch (14) which is furnished, as an input quantity, with the position deviation ($\Delta\varphi$) and whose output quantity represents the switching variable ($S1_1$) which can be set due to functional reasons.

14. System as claimed in any one of claims 8 to 13, **characterized in that** the calculating module (3) is composed of a module (15) for the compensation of the electromagnetic opposing force and a limiter (16) connected downstream of the module (15).

## Revendications

1. Procédé de commande d'un frein de stationnement qui peut être actionné de manière électromécanique par l'intermédiaire d'un élément de transmission de force, au moyen d'un actionneur qui est constitué d'un moteur électrique ainsi que d'une transmission autobloquante, disposée entre le moteur électrique et l'élément de transmission de force, **caractérisé en ce que** pour déterminer une tension ($U_{Akt, Soll}$) à appliquer à l'actionneur (5), on évalue la force d'actionnement voulue ($F_{Bet, Soll}$), le gradient de force d'actionnement ($\dot{F}_{Bet, Soll}$), le courant ($I_{Akt, Ist}$) amené à l'actionneur (5) ainsi que la position d'actionneur ($\varphi_{Akt, Ist}$).

2. Procédé selon la revendication 1, **caractérisé en ce que** la force d'actionnement voulue ($F_{Bet, Soll}$) ainsi que son gradient ($\dot{F}_{Bet, Soll}$) sont associés, par une commande et une surveillance des fonctions, à une position d'actionneur voulue ($\varphi_{Akt, Soll}$) ainsi qu'à une vitesse de rotation d'actionneur ($\omega_{Akt, Soll}$).

3. Procédé selon la revendication 2, **caractérisé en ce que** la vitesse de rotation d'actionneur ($\omega_{Akt, Soll}$) voulue ainsi que la position d'actionneur ($\varphi_{Akt, Soll}$) voulue sont soumises à une régulation de la position, afin de former un signal qui représente le courant d'actionneur ($I_{Akt, Soll}$) voulu.

4. Procédé selon la revendication 3, **caractérisé en ce que** le calcul de la tension ($U_{Akt, Soll}$), à appliquer à l'actionneur (5), s'effectue par interprétation du signal qui représente le courant d'actionneur ($I_{Axt, Soll}$) voulu, en tenant compte d'un signal ($\omega_{Akt, Ist}$) qui représente la valeur réelle de la vitesse de rotation de l'actionneur.

5. Procédé selon la revendication 4, **caractérisé en ce qu'**on peut appliquer à l'actionneur (5), en fonction d'une variable de commutation ($S_1$), une deuxième valeur de tension qui est de préférence de 0 V.

6. Procédé selon la revendication 5, **caractérisé en ce que** la variable de commutation ($S_1$) est posée par la régulation de position suivant la fonction ($SI_1$).

7. Procédé selon la revendication 5, **caractérisé en ce que** la variable de commutation ($S_1$) est posée par la commande et la surveillance de fonction, suivant le fonctionnement et/ou les défauts ($SI_2$).

8. Système de commande d'un frein de stationnement qui peut être actionné de manière électromécanique par l'intermédiaire d'un élément de transmission de force, au moyen d'un actionneur qui est constitué d'un moteur électrique ainsi que d'une transmission autobloquante, disposée entre le moteur électrique et l'élément de transmission des forces, **caractérisé en ce que**

a) il est prévu un modèle de commande de fonctionnement et de surveillance (2) auquel sont acheminés, en tant que grandeurs d'entrée, des signaux représentant les valeurs de consigne de la force d'actionnement ($F_{Bet, Soll}$) ainsi que du gradient de force d'actionnement ($\dot{F}_{Bet, Soll}$), un signal représentant la valeur réelle de position d'actionneur ($\varphi_{Akt, Ist}$), ainsi qu'un signal représentant la valeur réelle de courant d'actionneur ($I_{Akt, Ist}$), et qui produit, à partir des grandeurs d'entrée, la valeur de consigne de vitesse de rotation d'actionneur ($\omega_{Akt, Soll}$), la valeur de consigne de position d'actionneur ($\varphi_{Akt, Soll}$) ainsi que la valeur réelle de vitesse de rotation d'actionneur ($\omega_{Akt, Ist}$),

b) il est prévu un régulateur de position (1) auquel sont acheminés, en tant que grandeurs d'entrée, les signaux qui correspondent à la valeur de consigne et à la valeur d'entrée de vitesse de rotation d'actionneur ($\omega_{Akt, Soll}$, $\omega_{Akt, Ist}$) ainsi que la valeur de consigne et la valeur réelle de position d'actionneur ($\varphi_{Akt, Soll}$, $\varphi_{Akt, Ist}$), et qui fournit le signal représentant la valeur de consigne de courant d'actionneur ($I_{Akt, Soll}$) et derrière lequel

c) est monté un module de calcul (3) dans lequel le signal représentant la valeur de consigne de courant d'actionneur ($I_{Akt, Soll}$) est converti dans le signal représentant la tension ($U_{Akt, Soll}$) à appliquer à l'actionneur (5), et dans lequel a lieu une compensation de la contreforce électromotrice appliquée par l'actionneur (5), en tenant compte de la valeur réelle de vitesse d'actionneur ($\omega_{Akt, Ist}$).

9. Système selon la revendication 8, **caractérisé en ce que** derrière le module de calcul (3) sont montés des moyens de commutation (10, 11) qui permettent l'application d'une deuxième valeur de tension à l'actionneur (5), qui est de préférence de 0 V, en fonction d'une variable de commutation ($S_1$).

10. Système selon la revendication 9, **caractérisé en ce que** le signal de sortie des moyens de commutation (10) est acheminé vers un circuit de commande électronique (4) dont le signal de sortie ($I_{Akt, Ist}$) commande l'actionneur (5).

11. Système selon l'une des revendications 8 à 10, **caractérisé en ce que** le régulateur de position (1) est constitué d'un interrupteur à trois points (12) ainsi que d'un régulateur de vitesse de rotation (13) monté derrière l'interrupteur à trois points (12), l'interrupteur à trois points (12) imposant, en fonction d'un écart de réglage de position ($\Delta\varphi$), une valeur de consigne de système de rotation d'actionneur ($\omega_{Akt, Soll, R}$) définie qui est comparée à la valeur réelle de vitesse de rotation d'actionneur ($\omega_{Akt, Ist}$), et l'écart de réglage ($\Delta\omega$) qui en résulte est acheminé en tant que grandeur d'entrée vers le régulateur de vitesse de rotation (13) dont la grandeur de sortie représente la valeur de consigne de courant d'actionneur ($I_{Akt, Soll}$).

12. Système selon la revendication 11, **caractérisé en ce que** le régulateur de vitesse de rotation (13) est réalisé en tant que régulateur proportionnel et par intégration linéaire.

13. Système selon la revendication 11 ou 12, **caractérisé en ce qu'**à l'interrupteur à trois points (12) est monté en parallèle un interrupteur à deux points (14) auquel est acheminé comme grandeur d'entrée l'écart de réglage de position ($\Delta\varphi$) et dont la grandeur de sortie représente la variable de commutation ($SI_1$) qui peut être posée suivant le fonctionnement.

14. Système selon l'une des revendications 8 à 13, **caractérisé en ce que** le module de calcul (3) est constitué d'un module (15) pour la compensation de la contreforce électromotrice ainsi que d'un limiteur (16) montée derrière le module (15).

EP 1 032 520 B1

F_Bet

6

5

7

17

4

10

1

0V

3

U_Akt,Soll

11

S1

I_Akt,Soll

S1_1

S1_2

8

φ_Akt,Ist

I_Akt,Ist

2

φ_Akt,Soll

ω_Akt,Soll

ω_Akt,Ist

F_Bet,Soll

F_Bet,Soll

Fig. 1

9

Fig. 2

Fig. 3

$\varphi_{Akt,Soll}$

$\omega_{Akt,Soll}$

$I_{Akt,Soll}$

$\omega_{Akt,Ist}$

$\varphi_{Akt,Ist}$

$\Delta\varphi$

$\Delta\omega$

$\omega_{Akt,Soll,R}$

S1

12

13

14

15

16

3

$I_{Akt,Soll}$

$\omega_{Akt,Ist}$

$U_{Akt}$

$U_{Akt,Soll}$

UMax

-UMax